# EUROPÄISCHE PATENTSCHRIFT

(11) **EP 1 543 654 B1**
(45) Veröffentlichungstag und Bekanntmachung des Hinweises auf die Patenterteilung: **07.06.2006**
(21) Anmeldenummer: 03748084.5
(22) Anmeldetag: 24.09.2003
(51) Int. Cl.: H04L 12/28

(54) **VERFAHREN ZUR ANMELDUNG EINES MOBILEN ENDGERÄTES AN EINEM ZUGANGSPUNKT EINES LOKALEN KOMMUNIKATIONSNETZWERKES SOWIE ZUGANGSPUNKT UND ENDGERÄT ZUR DURCHFÜHRUNG DES VERFAHRENS**
METHOD FOR REGISTRATION OF A MOBILE TERMINAL AT AN ACCESS POINT OF A LOCAL COMMUNICATION NETWORK, AND ACCESS POINT AND TERMINAL FOR CARRYING OUT THE METHOD
PROCEDE POUR L'ENREGISTREMENT D'UN TERMINAL MOBILE A UN POINT D'ACCES D'UN RESEAU DE COMMUNICATION LOCAL, POINT D'ACCES ET TERMINAL POUR METTRE EN OEUVRE LE PROCEDE

(30) Priorität: 24.09.2002 DE 10244462
(43) Veröffentlichungstag der Anmeldung: 22.06.2005
(73) Patentinhaber: SIEMENS AKTIENGESELLSCHAFT, 80333 München (DE)
(72) Erfinder: JATSCHKA, Thomas, A-2102 Kleinengersdorf (AT)
(86) Internationale Anmeldenummer: PCT/EP2003/010637
(87) Internationale Veröffentlichungsnummer: WO 2004/030285

(56) Entgegenhaltungen:
- WO-A-01/37517
- US-A1- 2003 050 009
- "Bluetooth Spec V1.1 , A. Radio Specification (15-32), B. Baseband Specificaton - Channel Control (92-110), C. Link Manager Protocol - Power Control (222-223)" BLUETOOTH SPECIFICATION VERSION 1.1, [Online] 8. Mai 2001 (2001-05-08), Seiten 15-351, XP002282703 Gefunden im Internet: URL:http://www.bluetooth.com> [gefunden am 2004-05-28]
- JAKOBSSON M ET AL: "Security weaknesses in Bluetooth" TOPICS IN CRYPTOLOGY - CT-RSA. THE CRYPTOGRAPHERS TRACK AT RSA CONFERENCE. PROCEEDINGS, XX, XX, 8. April 2001 (2001-04-08), Seiten 176-191, XP002211423

## Beschreibung

Die Erfindung betrifft ein Verfahren zur Anmeldung eines mobilen Endgerätes an einem Zugangspunkt eines lokalen Kommunikationsnetzwerkes gemäß Anspruch 1, einem Zugangspunkt zur Durchführung des Verfahrens gemäß Anspruch 6.

Die Verschmelzung von Informations- und Kommunikationsnetzen hat dazu geführt, dass Datenübertragungsnetze, wie Lokale Netzwerke LANs, zunehmend mit drahtlosen Zugangspunkten, sogenannten Access Points ausgestattet werden, die es erlauben, neue Netzteilnehmer, auch als Netzknoten bezeichnet, drahtlos an das LAN zu binden. Diese Entwicklung geht sogar soweit, dass zum Teil solche Netze überwiegend bzw. vollständig drahtlos Daten austauschen.

Solcherlei Netze bieten auch Raum für unberechtigte Zugriffe auf Daten innerhalb des Netzes, so dass hierfür vielerlei Ansätze zur Gewährung der Sicherheit entwickelt wurden.

Einer der Ansätze ist die Beschränkung des Datenaustausches innerhalb des Netzes auf bekannte Netzknoten, wobei ein neuer Netzknoten dadurch dem Netz bekannt gemacht wird, dass er bei einem erstmaligen Anmelden, der Erstanmeldung, Authentifizierungsdaten, zumeist Schlüssel zur Verschlüsselung von Daten bei der Übertragung, mit dem jeweiligen Zugangspunkt austauscht.

Ein Nachteil ergibt sich, wenn dieser Austausch drahtlos erfolgt. In diesem Fall kann ein möglicher Angreifer die Authentifizierungsdaten abfangen, um sich für einen unerlaubten Zugriff als bekanntes Endgerät auszugeben bzw. verschlüsselte Daten mittels der Schlüssel zu entschlüsseln.

Aus der Bluetooth Specification Version 1.1 ist als ein initiierender Vorgang ein so genanntes Inquiry bekannt, bei dem sich in einem Funksende-/Funkempfangsbereich, eines das Inquiry durchführenden Funksende-/Funkempfangsgerätes befindende weitere Bluetooth-Funksende-/Funkempfangsgerätes detektiert werden, wobei die genannten Funksende/Funkempfangsgeräte mit unterschiedlichen Sendeleistungen betrieben werden können.

Aus der WO 01/37517 ist ein verteiltes Netzwerk Kommunikationssystem bekannt, bei dem mehreren Netzwerkbetreibern die Möglichkeit gegeben wird, eine gemeinsame verteilte Netwerkinfrastruktur zu nutzen.

Die der Erfindung zugrundeliegende Aufgabe ist, ein Verfahren und eine Anordnung anzugeben, die es erlaubt, unberechtigte Zugriffe auf ein lokales Kommunikationsnetz mit drahtlosen Zugangspunkten weitestgehend zu verhindern.

Diese Aufgabe wird durch das Verfahren ausgehend vom Oberbegriff des Anspruchs 1 durch dessen kennzeichnende Merkmale gelöst. Des Weiteren wird die Aufgabe durch den Zugangspunkt ausgehend vom Oberbegriff des Anspruchs 8 durch dessen kennzeichnende Merkmale sowie durch das Endgerät ausgehend vom Anspruch 9 durch dessen kennzeichnende Merkmale gelöst.

Bei dem erfindungsgemäßen Verfahren zur Erstanmeldung eines, insbesondere mobilen, Endgerätes an einem Zugangspunkt eines lokalen Kommunikationsnetzwerkes nach Anspruch 1 wird eine erste Sendeleistung einer ersten Funksende-/Funkempfangseinrichtung des Zugangspunktes nach Detektieren des Endgerätes derart reduziert, dass ein Sende-/Empfangsvorgang nur in einem Nahfeld des Zugangspunktes erfolgen kann.

Durch das einseitige Senken der ersten Sendeleistung der ersten Funksende-/Funkempfangseinrichtung des Zugangspunktes, so dass ein Empfang nur im Nahfeld des Zugangspunktes möglich ist, wird erreicht, dass Gelegenheiten für ein Mithören mittels eines anderen nicht als zum lokalen Kommunikationsnetz gehörenden Endgerätes (Lauscher) zumindest deutlich reduziert wird. Vor allem wird vermieden, dass ein Lauscher bei der Erstanmeldung üblicherweise übertragene sicherheitsrelevante Daten, wie z.B. Authentifizierungsschlüssel, auswerten kann, da sich ein Lauscher im Allgemeinen nicht im Nahfeld eines Zugangspunktes aufhält und für eine Auswertung sowohl die Daten vom Zugangspunkt als auch die Daten von dem sich zum ersten Mal anmeldenden Endgerät benötigt werden. Ein weiterer Vorteil ist, dass für die Umsetzung dieser Abwehr von Lauschangriffen Endgeräte nicht verändert werden müssen, beispielsweise kann die Abwehr auch dann gewährleistet werden, wenn die Endgeräte nicht in der Lage sind, ihre Sendeleistung zu verändern.

Vorteilhafterweise wird bei einer möglichen Weiterbildung der Erfindung nach Detektieren durch den Zugangspunkt eine an das Endgerät gerichtete Signalisierung durchgeführt, welches das Endgerät veranlasst, eine zweite Sendeleistung einer zweiten Funksende-/Funkempfangseinrichtung zu senken, wobei die zweite Sendeleistung derart reduziert wird, dass ein Sende-/Empfangsvorgang nur in einem Nahfeld des Endgerätes erfolgen kann und wobei die Signalisierung vor dem Reduzieren der ersten Sendeleistung erfolgt. Hierdurch wird erreicht, dass weder die vom Zugangspunkt gesendeten Daten noch die von dem Endgerät im Rahmen des Anmeldevorgangs zu sendenden Daten von einem sich außerhalb des Nahfeldes aufhaltenden Lauscher abgefangen werden können, so dass ein Auswerten der ausgetauschten Daten gänzlich verhindert wird.

Vorzugsweise erfolgt die Signalisierung durch Übermittlung einer ersten Nachricht, die für die Angabe eines durch den Zugangspunkt ermittelten empfangenen ersten Signalpegels, insbesondere eines "Received Signal Strength Indicator" RSSI, Wertes vorgesehen ist, wobei anstelle des vorgesehenen ersten Signalpegels ein zweiter, insbesondere einen höheren Wert aufweisender, Signalpegel angegeben wird. Der Vorteil dieser Weiterbildung ist durch die hierdurch mögliche einfachere Implementierung in bereits bestehende Systeme, die zumindest teilweise eine Übertragung über Funk nutzen, gegeben, da im Wesentlichen jeder Funkkommunikationsstandard das Versenden einer derartigen Nachricht als Rückkopplungsinformation für die Quelle des jeweiligen Signals reserviert. Mit dieser Weiterbildung ist es daher möglich, dass Endgeräte ohne Änderungen das erfindungsgemäße Verfahren unterstützen können. Lediglich die Zugangspunkte müssen derart ausgestaltet sein, dass sie diese gemäß Funkkommunikationsstandards reservierte Nachricht für einen anderen Zweck nutzen, d.h. unabhängig von der Höhe des tatsächlich empfangenen Signalpegels einen derart hohen empfangenen Signalpegel zu signalisieren, dass das Endgerät (Quelle) seine Sendeleistung auf ein Maß reduziert, dass ein Datenempfang nur in einem Nahfeld des Endgerätes möglich ist.

Enthält die Signalisierung eine zweite Nachricht, die das Endgerät zur Ausgabe eines Hinweises an den Nutzer des Endgerätes dahingehend auffordert, das Endgerät in das Nahfeld des Zugangspunktes zu bringen, wird vermieden, dass ein Datenaustausch zur Umsetzung der Erstanmeldung des Endgerätes dadurch ungewollt unterbrochen wird, dass ein Nutzer des Endgerätes keine Kenntnis darüber hat, dass er sich mit dem Endgerät zur Erstanmeldung im Nahfeld des Zugangspunktes aufhalten muss.

Um sicherzustellen, dass die zweite Nachricht den gewünschten Effekt - das Inkenntnissetzen des Nutzer - erzielt, wird die zweite Nachricht bei einer Weiterbildung nach Ablauf einer vorbestimmten Zeitspanne erneut gesendet, wobei zur Sicherstellung, dass diese Nachricht vom Endgerät empfangen werden kann, zumindest vorübergehend die erste Sendeleistung auf einen zum Zeitpunkt der Detektion bestehenden Pegel erhöht wird.

Vorstellbar ist es auch, dass das erneute Senden periodisch jeweils nach Ablauf der vorbestimmten Zeitspanne wiederholt wird, so dass mit einer höheren Wahrscheinlichkeit ausgeschlossen werden kann, dass der Nutzer die Nachricht nicht zur Kenntnis genommen hat.

Funktioniert die erste und zweite Funksende-/Funkempfangseinrichtung gemäß einem Kurzstreckenfunkstandard, so wird die bei diesem Standard ohnehin schon kurze Übertragungsdistanz noch verringert, so dass ein Lauscher gesehen wird, wenn er versucht, sich ins durch die erste und zweite Funksende/Funkempfangsrichtung funkversorgte Nahfeld zu begeben. Zudem weisen Funksende-/Funkempfangseinrichtungen neuerer Entwicklungsgenerationen, insbesondere nach dem Bluetooth-Standard funktionierende Funksende-/Funkempfangseinrichtungen, Chipsätze auf, die eine Variation der Sendeleistung in einem Endgerät erlauben.

Der erfindungsgemäße Zugangspunkt gemäß Anspruch 8 sowie das erfindungsgemäße Endgerät gemäß Anspruch 9 zeichnen sich durch Mittel zur Durchführung des Verfahrens aus, so dass das erfindungsgemäße Verfahren in den entsprechenden Geräten Unterstützung findet.

Weitere Einzelheiten und Vorteile der Erfindung werden in den Figuren 1 bis 2 erläutert. Davon zeigen
- Figur 1: Darstellung eines Anordnungsszenarios, bei dem ein Versuch eines Lauschangriffs möglich wäre,
- Figur 2: ein Ablaufdiagramm des erfindungsgemäßen Verfahrens bei einem Einsatz in einer Anordnung gemäß dem Szenario.

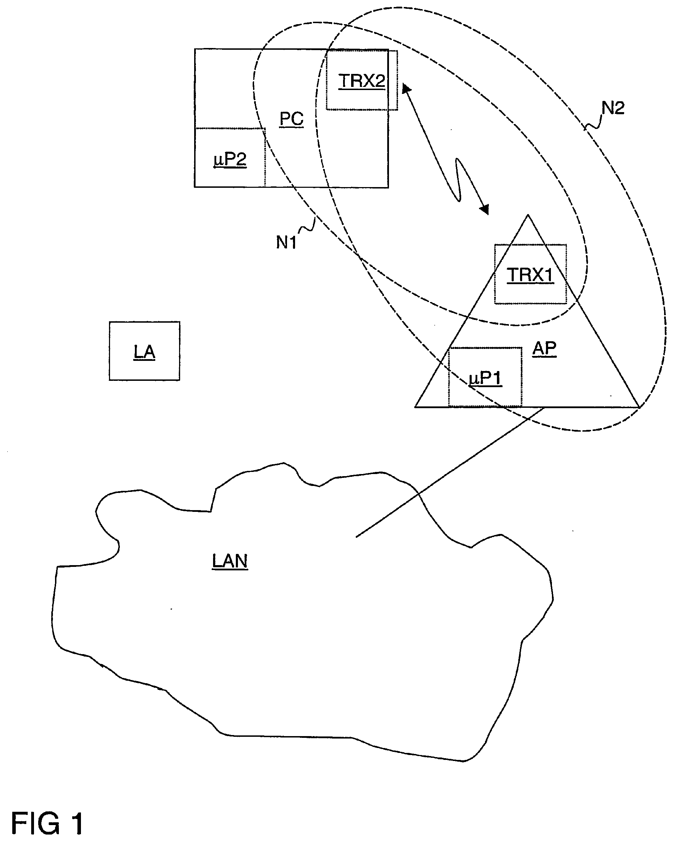

In Figur 1 ist beispielhaft eine Anordnung gezeigt, die erfindungsgemäß einen Versuch eines Lauschangriffs durch ein zum Lauschen verwendetes Endgerät LA abwehrt, wobei dies dadurch erreicht wird, dass sich ein einem lokalen Netzwerk LAN noch nicht bekanntes Endgerät, welches bei dem dargestellten Ausführungsbeispiel gemäß dem Bluetooth-Standard funktioniert, in einem ersten Funkversorgungsbereich N1 eines Zugangspunktes (Access Point) AP des lokalen Netzwerks LAN befindet.

Dieser erste Funkversorgungsbereich N1 wird von einer ersten Funksende-/Funkempfangseinrichtung TRX1 bereitgestellt, wobei eine erste Sendeleistung der ersten Funksende-/Funkempfangseinrichtung TRX1 einen von einem ersten Mikroprozessor µP1 geregelten Wert aufweist, der die Reichweite des ersten Funkversorgungsbereiches N1 auf ein Nahfeld des Access Points AP begrenzt, d.h. einen Radius aufweist, der im Allgemeinen wenige Dezimeter, alternativ auch bis zu einem Meter, beträgt.

Neben dem ersten Funkversorgungsbereich N1, ist bei diesem Ausführungsbeispiel auch der zweite Funkversorgungsbereich N2 eines neu anzumeldenden Endgerätes PC auf ein Nahfeld im Allgemeinen gleicher Reichweite wie der Reichweite des ersten Funkversorgungsbereiches N2 begrenzt. Dies wird durch Regelung einer zweiten Sendeleistung einer zweiten Funksende-/Funkempfangseinrichtung TRX2 des Endgerätes PC durch einen zweiten Mikroprozessor µP2 (Bluetooth-Chipsatz) erreicht.

Innerhalb des zweiten Funkversorgungsbereiches N2 befindet sich der Access Point AP, so dass eine Datenübertragung in beiden Richtungen problemlos möglich ist, wobei der Versuch eines Lauschangriffes durch ein anderes nicht gemeldetes Endgerät LA verhindert bzw. zumindest erschwert wird, dass es sich nicht innerhalb beider künstlich begrenzter Funkversorgungsbereiche N1, N2 befindet.

Eine Erstanmeldung, die gemäß Bluetooth Standard als "Pairing Prozess" bezeichnet wird, ist besonders kritisch, da sich bei diesem Prozess ein Bluetooth-Endgerät durch Übertragung von Schlüsseln einmalig bei einem Netz authentifiziert und damit fortan als bekanntes vertrauenswürdiges Endgerät "trusted device" gespeichert wird, so dass ein Abfangen dieser Information (Schlüssel) einem Lauscher die Möglichkeit für weitere unberechtigte Zugriffe auf das Netz ermöglichen würde.

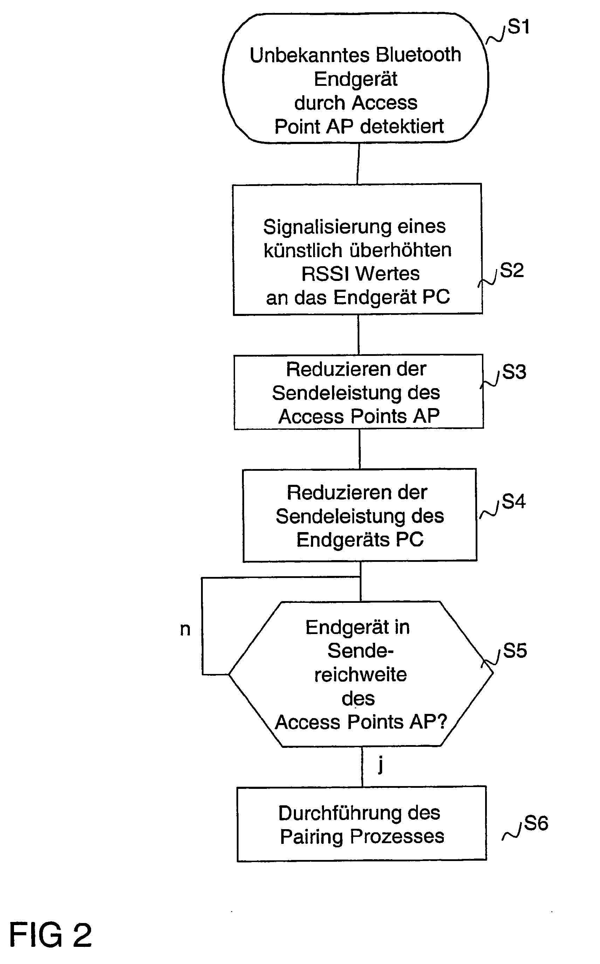

Die in Figur 1 gezeigte Anordnung wehrt derartige Angriffe durch das Ausführungsbeispiel des erfindungsgemäßen Verfahrens, dessen Ablaufdiagramm in Figur 2 dargestellt ist, ab.

Das in der Figur 2 dargestellte Ablaufdiagramm zeigt die im Rahmen des erfindungsgemäßen Verfahrens durchzuführenden Schritte in dem oben beschriebenen Szenario.

Das Verfahren beginnt im Allgemeinen damit, dass durch den Access Point AP ein unbekanntes Endgerät PC detektiert wird und sich der Access Point AP somit in einem ersten Schritt S1 im Zustand "Unbekanntes Bluetooth Endgerät" befindet.

Ausgehend von diesem ersten Schritt S1 wird anschließend dem Bluetooth-Endgerät PC in einem folgenden zweiten Schritt S2 im Allgemeinen ein künstlich überhöhter empfangener Signalpegel signalisiert (RSSI-Wert). Künstlich überhöht bedeutet hierbei, dass im Allgemeinen nicht der tatsächlich ermittelte Signalpegelwert signalisiert wird, sondern erfindungsgemäß ein derart hoher Wert, dass das Endgerät PC seine Sendeleistung auf ein Niveau senkt, welches zu einem zweiten Funkversorgungsbereich N2 des Endgerätes PC führt, der auf ein Nahfeld begrenzt ist.

Wird das Verfahren in einem Funksystem eingesetzt, welches Endgeräte aufweist, die keine Regelung der Sendeleistung unterstützen, kann der zweite Schritt S2 ausbleiben. Alternativ ist es auch denkbar, dass der zweite Schritt S2 bewusst durchgeführt wird, selbst wenn es sich um ein Endgerät PC handeln würde, das keine Regelung unterstützt. In diesem Fall wird der Abhörschutz allein dadurch gewährleistet, dass der Zugangspunkt AP in einem dritten Schritt S3 seine Sendeleistung auf einen Wert reduziert, der den ersten Funkversorgungsbereich N1 auf ein Nahfeld begrenzt.

Unterstützt dagegen das Endgerät PC eine Regelung der Sendeleistung - wie für dieses Ausführungsbeispiel angenommen - so wird sowohl durch das Reduzieren der Sendeleistung des Zugangspunktes AP im dritten Schritt S3 als auch durch Reduzieren der Sendeleistung des Endgerätes PC in einem vierten Schritt S4 die Abwehr eines möglichen Lauschers LA gewährleistet.

Im Anschluss hieran erfolgt in einem fünften Schritt S5 ein Überprüfen, ob sich das Endgerät PC in Reichweite der ersten Funksende-/Funkempfangsvorrichtung TRX1 des Access Points AP befindet, wobei dies beispielsweise dadurch realisiert wird, dass keine Antwort seitens des Endgerätes PC an den Zugangspunkt übermittelt wird.

Dieser fünfte Schritt S5 wird in einer Schleife solange wiederholt, d.h. Anfragen an das Endgerät PC gesendet, bis eine Antwort empfangen wird, so dass klar ist, dass das Endgerät sich im Nahfeld des Zugangspunktes befindet.

Um dies zu beschleunigen bzw. zu unterstützen, kann alternativ bzw. ergänzend mit der Signalisierung im zweiten Schritt auch eine Nachricht übermittelt werden, die das Endgerät PC veranlasst, seinem Nutzer einen Hinweis darauf zu geben, dass er sich mit dem Endgerät für diesen Pairing Prozess in das Nahfeld des Zugangspunktes AP begeben muss.

Alternativ kann in Verbindung mit dem fünften Schritt diese Aufforderung erstmalig erfolgen und/oder nach jedem negativen Detektionsergebnis periodisch wiederholt werden, um dem Nutzer eine Rückkopplung darüber zu geben, dass er evtl. noch nicht nahe genug am Zugangspunkt AP ist.

Ergibt das Detektieren im fünften Schritt S5, dass sich das Endgerät PC im Nahfeld des Access Points AP befindet, wie in Figur 1 dargestellt, so kann in einem sechsten Schritt S6 mit dem eigentlichen Pairing Prozess begonnen werden und das erfindungsgemäße Verfahren beendet werden.

## Patentansprüche

1. Verfahren zur Erstanmeldung eines Endgerätes (PC) an einem Zugangspunkt (AP) eines lokalen Kommunikationsnetzwerkes (LAN), **dadurch gekennzeichnet, dass**
a) eine erste Sendeleistung einer ersten Funksende-/Funkempfangseinrichtung (TRX1) des Zugangspunktes (AP) nach Detektieren (S1) des Endgerätes (PC) derart reduziert wird (S3), dass ein Sende-/Empfangsvorgang der Erstanmeldung nur in einem Nahfeld des Zugangspunktes (AP) erfolgen kann, wobei
b) nach Detektieren durch den Zugangspunkt eine an das Endgerät (PC) gerichtete Signalisierung durchgeführt wird, welches das Endgerät (PC) veranlasst, eine zweite Sendeleistung einer zweiten Funksende-/Funkempfangseinrichtung (TRX2) des Endgeräts zu senken (S2), wobei die zweite Sendeleistung derart reduziert wird, dass ein Sende-/Empfangsvorgang nur in einem Nahfeld des Endgerätes (PC) erfolgen kann und wobei die Signalisierung vor dem Reduzieren der ersten Sendeleistung erfolgt, und wobei
c) die Signalisierung durch Übermittlung einer ersten Nachricht, die für die Angabe eines durch den Zugangspunkt (AP) ermittelten empfangenen ersten Signalpegels, "Received Signal Strength Indicator" (RSSI) Wertes, vorgesehen ist (S2), erfolgt, wobei anstelle des ersten Signalpegels ein zweiter, insbesondere einen höheren Wert aufweisender, Signalpegel angegeben wird.

2. Verfahren nach dem vorhergehenden Anspruch, **dadurch gekennzeichnet, dass** die Signalisierung (S2) eine zweite Nachricht enthält, die das Endgerät (PC) zur Ausgabe eines Hinweises an den Nutzer des Endgerätes (PC) dahingehend auffordert, das Endgerät (PC) in das Nahfeld des Zugangspunktes (AP) zu bringen.

3. Verfahren nach Anspruch 2, **dadurch gekennzeichnet, dass** die zweite Nachricht nach Ablauf einer vorbestimmten Zeitspanne erneut gesendet wird, wobei hierzu zumindest vorübergehend die erste Sendeleistung auf einen zum Zeitpunkt der Detektion bestehenden Pegel erhöht wird.

4. Verfahren nach Anspruch 3, **dadurch gekennzeichnet, dass** das erneute Senden periodisch jeweils nach Ablauf der vorbestimmten Zeitspanne wiederholt wird (S5).

5. Verfahren nach einem der vorhergehenden Ansprüche, **dadurch gekennzeichnet, dass** die erste und zweite Funksende-/Funkempfangseinrichtung (TRX1, TRX2) gemäß einem Kurzstreckenfunkstandard, insbesondere nach dem Bluetooth-Standard, funktioniert.

6. Zugangspunkt (AP) **gekennzeichnet durch** Mittel (µP1, TRX1) zur Durchführung des Verfahrens nach einem der vorhergehenden Ansprüche 1 bis 4.

## Claims

1. Method for the initial registration of a mobile terminal (PC) at an access point (AP) of a local communication network (LAN), **characterized in that**
a) a first transmission power of a first radio transmitter/radio receiver (TRX1) of the access point (AP) is reduced after detection (S1) of the terminal (PC) such that a transmit/receive process can only be carried out in a near field of the access point (AP).
b) after detection by the access point, a signalling directed at the terminal (PC) is implemented, which prompts the terminal (PC) to reduce (S2) a second transmission power of a second radio transmitter/radio receiver (TRX2) of the terminal, the second transmission power being reduced such that a transmit/receive process can only be carried out in a near field of the terminal (PC), and the signalling only taking place prior to reduction of the first transmission power.
c) the signalling takes place by transmitting a first message, which is provided to indicate a received first signal level determined by the access point (AP), in particular a first signal level Received Signal Strength Indicator (RSSI) value (S2), whereby a second, signal level in particular having a higher value is indicated instead of the first signal level.

2. Method according to one of the preceding claims, **characterized in that** the signalling (S2) contains a second message which prompts the terminal (PC) to instruct the user of the terminal (PC) to move the terminal (PC) into the near field of the access point (AP).

3. Method according to claim 2, **characterized in that** the message is retransmitted after the expiry of a predetermined time interval, the first transmission power being increased at least temporarily to this end to a level existing at the time of detection.

4. Method according to claim 3, **characterized in that** retransmission is periodically repeated after expiry of each predetermined time interval.

5. Method according to one of the preceding claims, **characterized in that** the first and second radio transmitters/radio receivers (TRX1, TRX2) operate according to a short-range radio standard, in particular according to the Bluetooth standard.

6. Access point (AP) **characterized by** means (µP1, TRX1) for carrying out the method according to one of the preceding claims 1 to 4.

## Revendications

1. Procédé pour faire une première demande d'accès d'un terminal (PC) à un point d'accès (AP) d'un réseau de communication local (LAN), **caractérisé en ce que**
a) une première puissance d'émission d'un premier équipement radioémetteur / radiorécepteur (TRX1) du point d'accès (AP), après la détection (S1) du terminal (PC), subit une réduction (S3) telle qu'une opération d'émission / de réception de la première demande d'accès ne peut se produire que dans un champ proche du point d'accès (AP), dans lequel
b) après la détection par le point d'accès, une signalisation adressée au terminal (PC) est opérée, laquelle oblige le terminal (PC) à baisser (S2) une deuxième puissance d'émission d'un deuxième équipement radioémetteur / radiorécepteur (TRX2) du terminal, la deuxième puissance d'émission subissant une réduction telle qu'une opération d'émission / de réception ne peut se produire que dans un champ proche du terminal (PC) et la signalisation se produisant avant la réduction de la première puissance d'émission et dans lequel
c) la signalisation se produisant par transmission d'un premier message qui est prévu (S2) pour l'indication d'un premier niveau de signal reçu déterminé par le point d'accès (AP), d'une valeur «Received Signal Strength Indicator» (RSSI), un deuxième niveau de signal présentant notamment une valeur plus élevée étant indiqué à la place du premier niveau de signal.

2. Procédé selon la revendication précédente, **caractérisé en ce que** la signalisation (S2) contient un deuxième message qui invite le terminal (PC) à envoyer à l'utilisateur du terminal (PC) une information selon laquelle il faut placer le terminal (PC) dans le champ proche du point d'accès (AP).

3. Procédé selon la revendication 2, **caractérisé en ce que** le deuxième message est de nouveau émis après l'expiration d'une durée prédéterminée, la première puissance d'émission, à cet effet, subissant au moins temporairement une augmentation pour passer à un niveau existant au moment de la détection.

4. Procédé selon la revendication 3, **caractérisé en ce que** la nouvelle émission est répétée (S5) périodiquement respectivement après l'expiration de la durée prédéterminée.

5. Procédé selon l'une des revendications précédentes, **caractérisé en ce que** les premier et deuxième équipements radioémetteurs / radiorécepteurs (TRX1, TRX2) fonctionnent selon un standard radio courtes distances, en particulier selon le standard Bluetooth.

6. Point d'accès (AP), **caractérisé par** des moyens (µP1, TRX1) pour la mise en oeuvre du procédé selon l'une des revendications précédentes 1 à 4.
